# EUROPEAN PATENT APPLICATION

(11) **EP 2 391 027 A1**
(43) Date of publication of application: **30.11.2011**
(21) Application number: 10163940.9
(22) Date of filing: 26.05.2010
(51) Int. Cl.: H04B 1/38, G08B 3/10, H04M 19/04, G08B 5/22

(54) **Method and apparatus for detecting and amplifying notification signals**

(71) Applicant: RESEARCH IN MOTION LIMITED, Waterloo, Ontario N2L 3W8 (CA)
(72) Inventor: Pasquero, Jerome, Waterloo Ontario N2L 3W8 (CA); Ladouceur, Norman, Miner, Waterloo Ontario N2L 3W8 (CA); Griffin, Jason, Tyler, Waterloo Ontario N2L 3W8 (CA)
(74) Representative: MERH-IP Matias Erny Reichl Hoffmann

(57) **Abstract**

A holster for a mobile electronic device, comprising at least one input for detecting at least one notification signal generated by the mobile electronic device, at least one output for generating at least one amplified notification signal, and a processor connected to the input and output for causing the output to generate the amplified notification signal in response to detection of the least one notification signal generated by the mobile electronic device.

## Description

### BACKGROUND

The present specification relates generally to holders for mobile electronic devices, and in particular to a method and apparatus within such holders for detecting and amplifying notification signals generated by a mobile electronic device.

Holders for electronic devices are known, For example, holsters are known to protect and conveniently transport a mobile electronic device such as smart telephones, PDAs, etc., when it is not in use. A holster may have a belt clip for attachment to a user's belt, or may have other attachment means for attachment to a purse or knapsack, or may simply be a small accessory that provides a protective cover for the device, which can be used to store the device in a pocket, purse, briefcase or wherever else desired. It is also known to provide a magnet in the holster, with a Hall Effect sensor in the device, so that the device is either turned off in response to being placed in the holster such that the sensor aligns with the magnet, or have certain functions thereof disabled. For example, it is common to disable a keyboard, trackball or other input means of the mobile electronic device, and to turn off any display.

The use of electronic applications such as calendar applications, cellular telephone applications and email applications, is widespread, with many mobile electronic devices having at least one such application installed. A number of such applications may cause a mobile electronic device to generate notification signals such as ring tones, blinking message lights, vibrations and the like for notifying a user of events such as incoming calls, incoming messages (e.g. email or SMS), appointments and tasks, etc.

However, when the mobile electronic device is disposed within a holster it is possible for such notifications to go unnoticed because an audio notification cannot be heard in a noisy environment, the device vibration or message light are not perceived if the holstered device is in a purse, etc., with the result that calendared meetings, incoming calls or tasks may be accidentally missed or overlooked.

Consequently, it is desirable to provide a notification mechanism when a mobile electronic device is stored in a holster.

It should be understood that the word "holster", as used throughout this specification, means any holder adapted to accommodate the device, whether or not it is of the belt-mountable type most commonly referred to as a holster.

### SUMMARY

In general, a method and apparatus are set forth for implementation within a holster for detecting and amplifying notification signals generated by a mobile electronic device.

According to one aspect of this specification, there may be provided a holster for a mobile electronic device, comprising at least one input for detecting at least one notification signal generated by said mobile electronic device; at least one output for generating at least one of an amplified or transformed notification signal; and a processor connected to said at least one input and at least one output for causing said at least one output to generate said at least one amplified or transformed notification signal in response to detection of said least one notification signal generated by said mobile electronic device.

According to another aspect, there may be provided a notification method comprising detecting at least one notification signal generated by a mobile electronic device; and in response generating at least one amplified or transformed notification signal.

According to yet another aspect, there may be provided a notification method comprising detecting holstering of a mobile electronic device; generating a notification signal according to a predetermined pattern; and detecting said pattern and in response generating at least one amplified or transformed notification signal in accordance with said pattern.

### BRIEF DESCRIPTION OF THE DRAWINGS

The embodiments will be better understood with reference to the following Figures in which like numerals denote like parts and in which:

FIG. 1 is an exploded perspective view of a mobile electronic device and a holster therefor, according to a non-limiting embodiment;

FIG. 2 is a perspective view of a further non-limiting embodiment in which the holster has a fold-over closure flap;

FIG. 3 is a block diagram of showing functionality of the holster according FIGS. 1 and 2;

FIGS. 4A, 4B and 4C are block/schematic diagrams of tactile notification amplification/transformation functionality of the holster in FIG. 3;

FIGS. 5A, 5B and 5C are block/schematic diagrams of visual notification amplification/transformation functionality of the holster in FIG. 3;

FIGS. 6A, 6B and 6C are block/schematic diagrams of audio notification amplification/transformation devices according to functionality of the holster in FIG. 3; and

FIG. 7 is a flowchart showing operation of the holster in FIG. 3.

### DESCRIPTION OF PREFERRED EMBODIMENTS

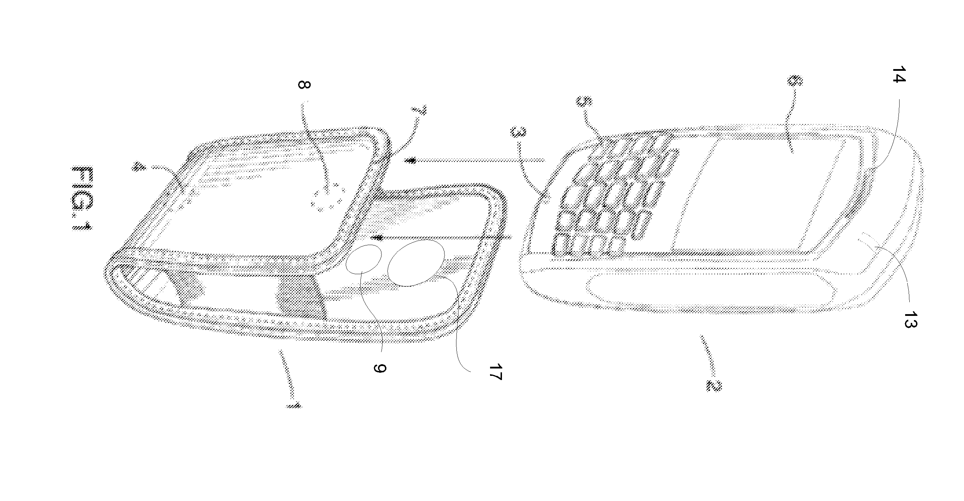

FIG. 1 shows a holster 1 for a mobile electronic device 2, according to one aspect of the invention. The mobile electronic device has a Hall Effect sensor 3 embodied therein and the holster has a magnet 4 positioned to align with the sensor when the device is fully holstered. The device 2 is programmed so that when the Hall Effect sensor detects the magnet, the device is disabled, or at least certain functional elements thereof are disabled, for example the keyboard 5 and display 6, and other elements as applicable, for example a trackball (not shown).

Preferably the sensor 3 is located near the bottom of the device, i.e. near the first part of the device to be inserted in the holster, and preferably well below the keyboard or trackball or other input means, so that the device is disabled before any accidental inputs from contact with the holster 1.

The mobile electronic device 2 may be provided with a ringer 14 for generating audio notification of an event such as an incoming call, message, calendar event, etc.; an internal vibration motor (not shown) for causing the device to vibrate and thereby provide tactile notification of an event or events; a message light 13 to provide visual notification of events such as an incoming message or voice mail. Other audio, visual or tactile notification mechanisms may also be provided on the mobile electronic device 2 for providing notification of phone, email, social networking events, etc.

In the exemplary embodiment of FIG. 1, the holster 1 has an optical sensor 8, located inside and near an upper edge 7 of the holster, for detecting light generated by the display 6. For example, optical sensor 8 may be configured to detect light generated in a specific frequency range associated with the display 6.

An accelerometer 9 is also provided for detecting vibration of the device and a mechanical vibration motor 17 is provided for causing the holster 1 to vibrate. For example, accelerometer 9 may be configured to detect a range of acceleration having profile/signature that is typical of a vibrating motor (e.g. 100-250Hz)

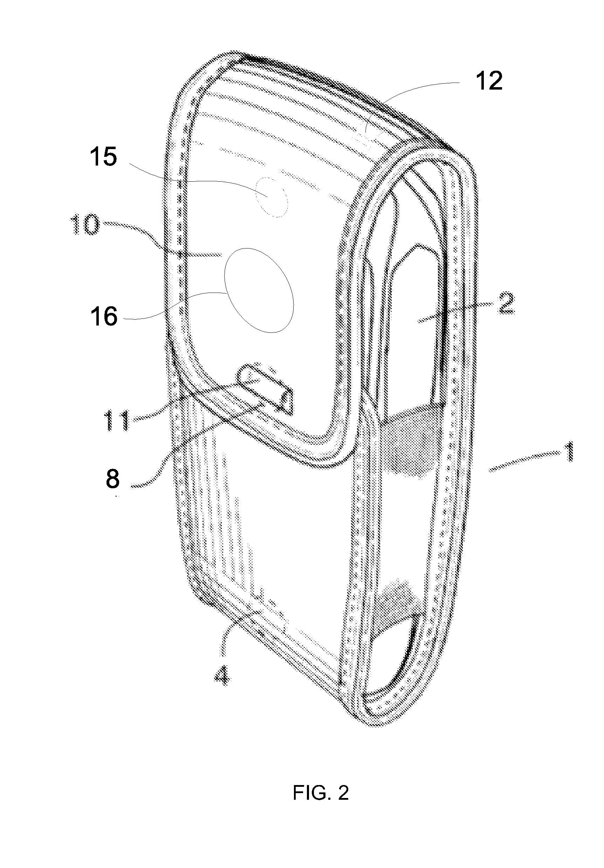

In addition to the optical sensor 8, accelerometer 9 and mechanical vibration motor 17 of FIG. 1, the holster 1 depicted in the embodiment of FIG. 2 includes a fold-over flap 10, having a high intensity lamp 11 and a speaker 16 on the outside, and a further optical sensor 12 on the inside adjacent a message lamp 13 of the mobile electronic device (FIG. 1). Lamp 11 can, for example, be a gallium nitride (GaN)-based LED or high-power laser diode. Speaker 16 can be a high power speaker. In the embodiment of FIG. 2 the high intensity lamp 11 is disposed adjacent optical sensor 8. However, the high intensity lamp 11 may be disposed at any other suitable location on holster 1.

The embodiments of FIGS. 1 and 2 are exemplary only and are not intended to be limiting. Additional embodiments of holster 1 are possible with different combinations of accelerometers, light sensors, microphones or other mechanisms for detecting notifications generated by the mobile electronic device 2.

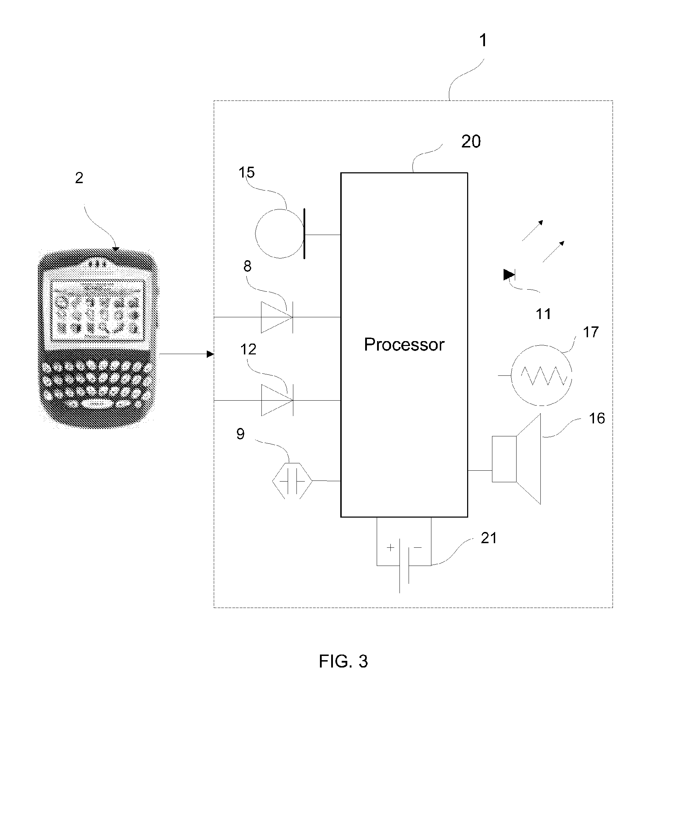

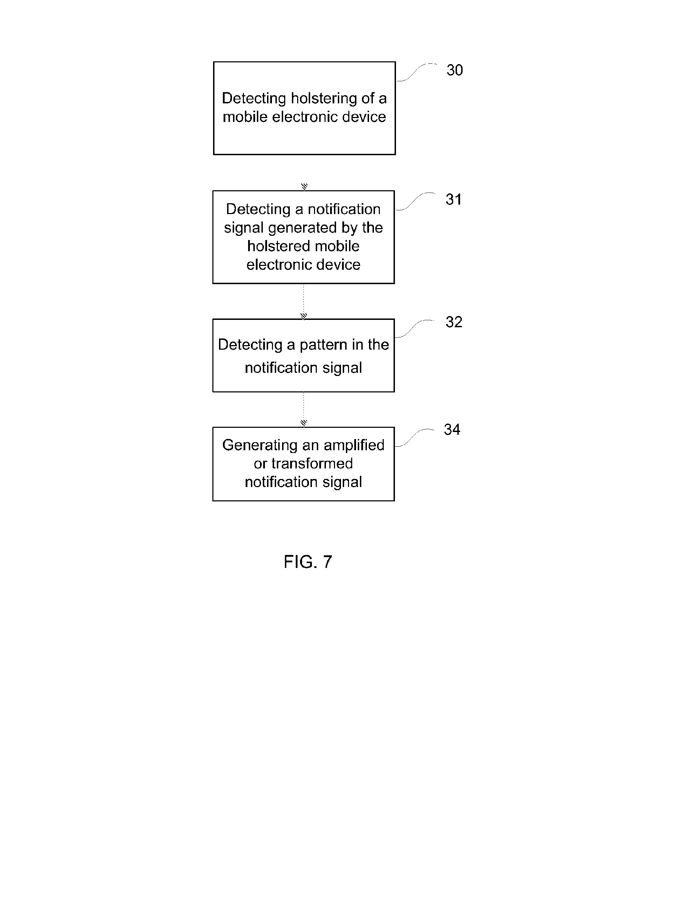

As shown schematically in FIG. 3 and as described in the flowchart of FIG. 7, the holster 1 of FIG. 1 or 2 includes a processor 20 for receiving notification signal inputs from mobile electronic device 2, such as illumination of the display 6 and/or ringing and/or vibration of the device 2 in the event of an incoming call, flashing of the message indicator 13 in the event of an incoming message or voice mail, etc. The notification signals are detected by optical sensors 8 and 12, accelerometer 9 and microphone 15, and applied to inputs of the processor 20 (step 31 in FIG. 7). The processor 20 amplifies and/or transforms the detected notification signals (step 34 in FIG. 7) for output by lamp 11, vibration motor 17 and/or speaker 16. The processor 20 and active devices of holster 1, such as vibration motor 17 and lamp 11, are powered by a battery 21. However, in an alternative embodiment the holster 1 is powered directly from the battery of device 2, instead of the dedicated battery 21, for example through external leads on the device 2.

In its simplest implementation, the mobile electronic device 2 does not need to be aware of the fact that it is disposed within the holster 1. The device behaves as usual and the holster 1 amplifies or transforms the notifications signals. One advantage of the holster according to the exemplary embodiment is that larger and more powerful notification signals can be generated than is possible using the device 2 alone, for example because space in a holster is not as limited as in the device 2 and/or obeys different space constraints than the device 2. For instance, the vibration motor 17 used in the holster 1 can be larger (and therefore more powerful) than its counterpart in the device 2. This is also true of the speaker 16 and lamp 11.

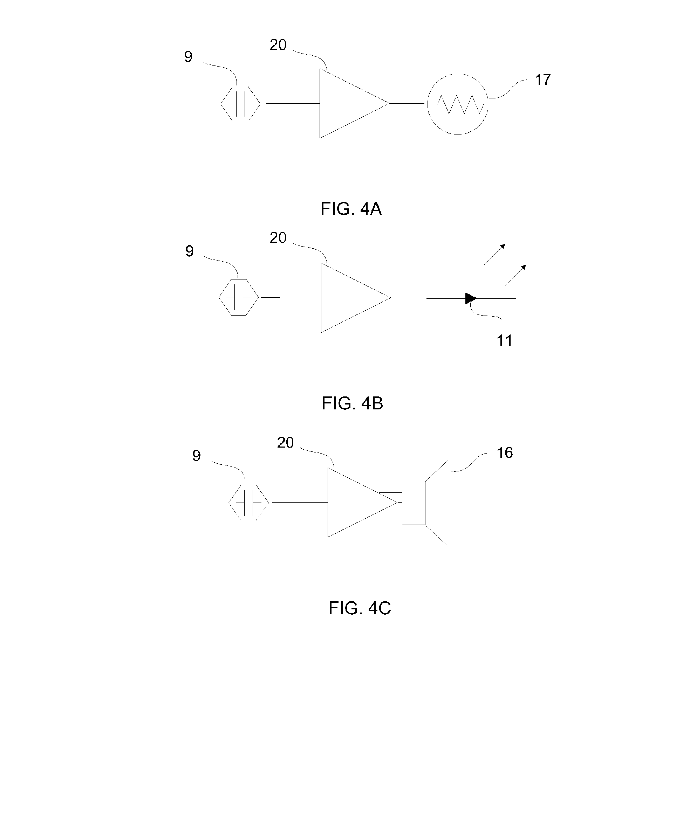

Additional description of the amplification/transformation functionality of holster 1 is provided with reference to FIGS. 4, 5 and 6.

As shown in FIG. 4A, accelerometer 9 detects vibration of the mobile electronic device 2 and processor 20 effectively amplifies the vibration by activating higher amplitude vibration motor 17 so as to vibrate with a stronger tactile force than that provided by the device 2. The construction of vibration motor 17 may be as set forth in commonly-owned US Patent Publication Nos. 20070093181, 20080054828 or 20100000352 (Fyke).

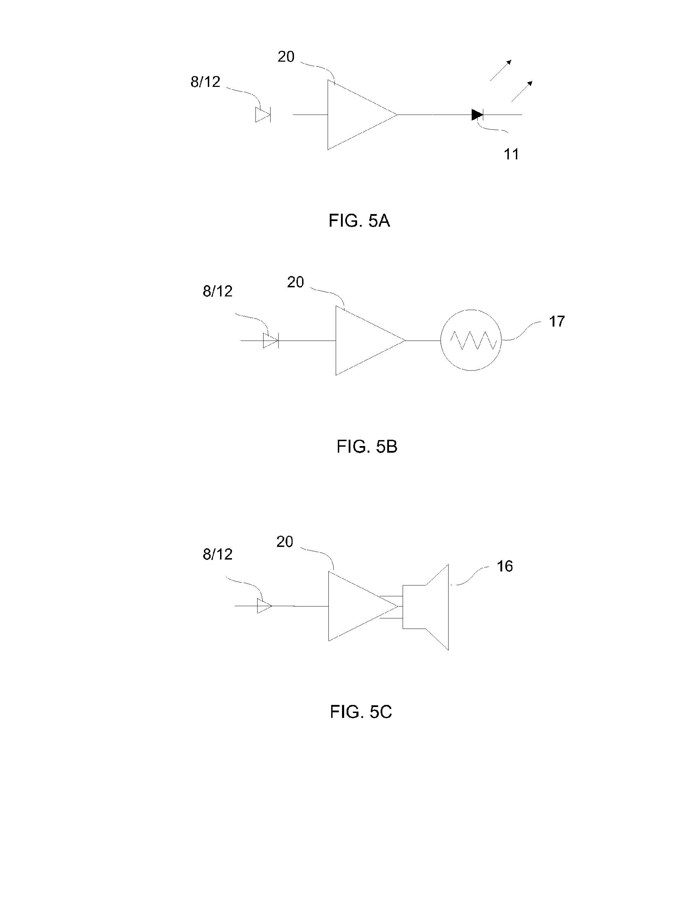

As shown in FIG. 5A, sensor 8 and/or sensor 12 detects light generated by the display 6 and/or message light 13, respectively, of the mobile electronic device 2 and processor 20 effectively amplifies the detected light by activating high power lamp 11 of holster 1 to illuminate with a strong light notification signal. For example, in one embodiment the light signal generated by lamp 11 may be sufficiently strong as to project light outside of a purse or other carrying accessory so that the purse looks as if it is "glowing".

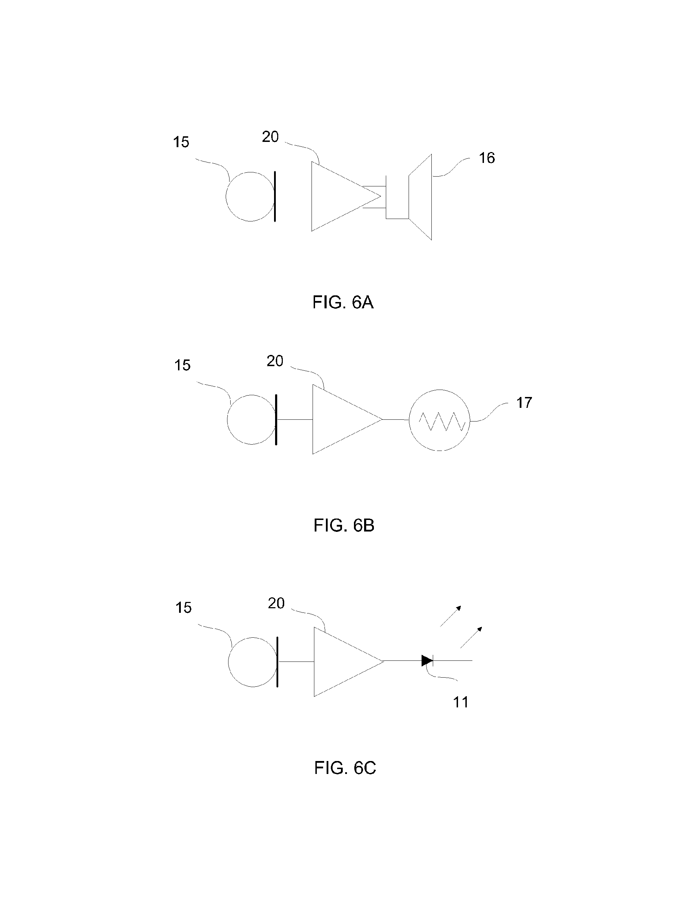

As shown in FIG. 6A, microphone 15 detects a ringing signal (or other audio notification signal) generated by the speaker 14 of the mobile electronic device 2 and processor 20 amplifies the detected audio signal so as to cause high power speaker 16 of holster 1 to generate an audio signal that is sufficiently loud that it can be heard outside of a purse, pocket, briefcase, etc.

As shown in FIGS. 4B, 4C, 5B, 5C, 6B and 6C, processor 20 can also transform the notification modality. For example, in some configurations detection of vibration by the accelerometer can cause lamp 11 to illuminate (FIG. 4B) or speaker 16 to generate an audio notification (FIG. 4C). In other configurations detection of light from one or both of display 6 and/or message light 13 can cause vibration motor 17 to vibrate (FIG. 5B) or speaker 16 to generate an audio notification (FIG. 5C). In yet other configurations, detection of an audio notification by microphone 15 can cause vibration motor 17 to vibrate (FIG. 6B) or cause lamp 11 to illuminate (FIG. 6C).

As discussed above, in its simplest implementation, the mobile electronic device 2 does not need to be aware of the fact that it is disposed within the holster 1. However, in more advanced implementations, the mobile electronic device 2 can modify the notifications in the event that it is disposed within holster 1. For example, device 2 may be programmed so that when the Hall Effect sensor 3 detects magnet 4 (step 30 in FIG. 7), the device is configured so that message indicator 13 is caused to flash according to a predetermined pattern associated with the calling party. Thus, upon detecting the flashing light pattern via optical sensor 12, (step 32 in FIG. 7), processor 20 can be programmed to generate an amplified audio notification via speaker 16 indicative of who is calling (e.g. a customized ring tone or annunciate the caller name).

In another embodiment, the holster 1 may be provided with a Hall Effect sensor, or other mechanism, for detecting the presence of device 2 (step 30 in FIG. 7), such that monitoring of the device for notification only occurs when the device 2 is disposed within the holster 1 but not when the device is outside of the holster.

Specific embodiments have been shown and described herein. However, modifications and variations may occur to those skilled in the art. For example, as discussed above, although the exemplary embodiment has been described in terms of implementation on a portable handheld electronic device, the principles set forth herein may be applied to other devices such as PDA's, tablet computers, etc. Also, as discussed above, the holster 1 is not limited to an enclosure for holding the device 2. For instance, the holster can be in the form of a small accessory that can be kept in, or form part of, a purse or briefcase. Furthermore, the holster may contain one, all or fewer than all of the microphone 15, accelerometer 9 and sensors 8 and 12. For example, the holster 1 may be provided with only the microphone 15, which can be used to detect audio ringing or sound made by the electronic device 2 when it is vibrating, and to convert such detected notification signals to a suitable audio/visual/tactile output, as discussed above.

All such modifications and variations are believed to be within the sphere and scope of the present embodiment.

## Claims

1. A holster (1) for a mobile electronic device (2), comprising:
at least one input (8, 9, 12, 15) for detecting at least one notification signal generated by said mobile electronic device;
at least one output (11, 16, 17) for generating at least one of an amplified or transformed notification signal; and
a processor (20) connected to said at least one input and at least one output for causing said at least one output to generate said at least one amplified or transformed notification signal in response to detection of said least one notification signal generated by said mobile electronic device.

2. A holster as claimed in claim 1, wherein said at least one input is one of either an accelerometer (9), an optical sensor (8, 12), or a microphone (15) for detecting said at least one notification signal generated by said mobile electronic device (2).

3. A holster as claimed in claim 1 or 2, wherein said at least one output is a lamp (11) for generating a visual notification signal.

4. A holster as claimed in any of claims 1 to 3, wherein said at least one output is a vibration motor (17) for generating a tactile notification signal.

5. A holster as claimed in any of claims 1 to 4, wherein said at least one output is a speaker (16) for generating an audio notification signal.

6. A notification method, comprising:
detecting (31) at least one notification signal generated by a mobile electronic device (2); and
in response generating (34) at least one amplified or transformed notification signal.

7. A notification method as claimed in claim 6, wherein said at least one notification signal generated by said mobile electronic device (2) is a visual notification signal and said at least one amplified or transformed notification signal is one of either a visual, tactile of audio notification signal.

8. A notification method as claimed in claim 6 or 7, wherein said at least one notification signal generated by said mobile electronic device (2) is an audio notification signal and said at least one amplified or transformed notification signal is one of either a visual, tactile of audio notification signal.

9. A notification method as claimed in any of claims 6 to 8, wherein said at least one notification signal generated by said mobile electronic device (2) is a tactile notification signal and said at least one amplified or transformed notification signal is one of either a visual, tactile of audio notification signal.

10. A notification method as claimed in claim 7, wherein said visual notification signal generated by said mobile electronic device (2) is at least one of illumination of a display or message indicator of said mobile electronic device.

11. A notification method as claimed in claim 8, wherein said audio notification signal generated by said mobile electronic device (2) is at least one of a ring tone or sound resulting from vibration of said mobile electronic device.

12. A notification method as claimed in claim 9, wherein said tactile signal generated by said mobile electronic device (2) is a vibration of said mobile electronic device.

13. A notification method as claimed in any of claims 6 to 12, further comprising detecting a pattern (32) in said at least one notification signal generated by a mobile electronic device (2) and in response generating said at least one amplified or transformed notification signal in accordance with said pattern.

14. A notification method, comprising
detecting holstering (30) of a mobile electronic device (2);
generating a notification signal according to a predetermined pattern; and
detecting said pattern (32) and in response generating at least one amplified or transformed notification signal (34) in accordance with said pattern.

15. The notification method of claim 14, wherein said pattern is indicative of an incoming caller to said mobile electronic device.

## Amended claims

### Amended claims in accordance with Rule 137(2) EPC.

**1.** A holster (1) for a mobile electronic device (2), comprising:
at least one input (8, 9, 12, 15) for detecting at least one audio, visual or tactile notification signal generated by said mobile electronic device;
at least one output (11, 16, 17) for generating at least one of an amplified or transformed audio, visual or tactile notification signal and
a processor (20) connected to said at least one input and at least one output for causing said at least one output to generate said at least one amplified or transformed audio, visual or tactile notification signal in response to detection of said least one audio, visual or tactile notification signal generated by said mobile electronic device.

**2.** A holster as claimed in claim 1, wherein said at least one input is one of either an accelerometer (9), an optical sensor (8, 12), or a microphone (15) for detecting said at least one notification signal generated by said mobile electronic device (2).

**3.** A holster as claimed in claim 1, wherein said at least one output is a lamp (11) for generating a visual notification signal.

**4.** A holster as claimed in claim 1, wherein said at least one output is a vibration motor (17) for generating a tactile notification signal.

**5.** A holster as claimed in claim 1, wherein said at least one output is a speaker (16) for generating an audio notification signal.

**6.** A notification method, comprising:
detecting (31) at least one notification signal generated by a mobile electronic device (2); and
in response generating (34) at least one amplified or transformed audio, visual or tactile notification signal.

**7.** A notification method as claimed in claim 6, wherein said at least one audio, visual or tactile notification signal generated by said mobile electronic device (2) is a visual notification signal.

**8.** A notification method as claimed in claim 6, wherein said at least one notification signal generated by said mobile electronic device (2) is an audio notification signal.

**9.** A notification method as claimed in claim 6, wherein said at least one notification signal generated by said mobile electronic device (2) is a tactile notification signal.

**10.** A notification method as claimed in claim 7, wherein said visual notification signal generated by said mobile electronic device (2) is at least one of illumination of a display or message indicator of said mobile electronic device.

**11.** A notification method as claimed in claim 8, wherein said audio notification signal generated by said mobile electronic device (2) is at least one of a ring tone or sound resulting from vibration of said mobile electronic device.

**12.** A notification method as claimed in claim 9, wherein said tactile signal generated by said mobile electronic device (2) is a vibration of said mobile electronic device.

**13.** A notification method as claimed in claim 6, further comprising detecting a pattern (32) in said at least one notification signal generated by a mobile electronic device (2) and in response generating said at least one amplifies or transformed notification signal in accordance with said pattern.
